# EUROPÄISCHE PATENTSCHRIFT

(11) **EP 3 558 757 B1**
(45) Veröffentlichungstag und Bekanntmachung des Hinweises auf die Patenterteilung: **11.08.2021**
(21) Anmeldenummer: 17818150.9
(22) Anmeldetag: 21.12.2017
(51) Int. Cl.: B60R 21/34, B60R 19/40

(54) **STOSSFÄNGERANORDNUNG FÜR DEN FRONTBEREICH EINES PERSONENKRAFTWAGENS**
BUMPER ARRANGEMENT FOR THE FRONT REGION OF A PASSENGER CAR
ENSEMBLE PARE-CHOCS POUR LA ZONE FRONTALE D'UNE VOITURE PARTICULIÈRE

(30) Priorität: 22.12.2016 DE 102016226096
(43) Veröffentlichungstag der Anmeldung: 30.10.2019
(73) Patentinhaber: Bayerische Motoren Werke Aktiengesellschaft, 80809 München (DE)
(72) Erfinder: GROSS, Martin, 85778 Haimhausen (DE); NOVINE, Mazdak, 80636 München (DE); FICHTINGER, Gerhard, 85630 Grasbrunn (DE); RUDOLPH, Tim, 80469 München (DE)
(86) Internationale Anmeldenummer: PCT/EP2017/084003
(87) Internationale Veröffentlichungsnummer: WO 2018/115232

(56) Entgegenhaltungen:
- EP-A1- 2 692 589
- WO-A1-2016/189140
- DE-A1- 10 100 875
- DE-A1- 10 345 749
- DE-B3-102008 038 062

## Beschreibung

Die Erfindung betrifft eine Stoßfängeranordnung für den Frontbereich eines Personenkraftwagens sowie einen Personenkraftwagen mit einer Stoßfängeranordnung, nach dem Oberbegriff des Anspruchs 1 bzw. 7.

Eine derartige Stoßfängeranordnung ist beispielsweise aus der WO 2014/154630 A1 bekannt. Die bekannte Stoßfängeranordnung weist einen oberen und einen unteren Lastpfad auf. Der obere Lastpfad wird von oberen Längsträgern und einem oberen Querträger gebildet und trägt im Fall einer Kollision des Personenkraftwagens den Hauptteil des Energieabbaus. Der untere Lastpfad wird von unteren Längsträgern und einem unteren Querträger gebildet. Der untere Querträger wird üblicherweise auch als "lower stiffener" oder als "lower bumper stiffener" bezeichnet. Beide Querträger sind von einer Stoßfängerverkleidung überdeckt. Der untere Querträger dient dazu, die Stoßfängerverkleidung in ihrem unteren Bereich insbesondere bei einer unfallbedingten Kraftbeaufschlagung mit einem Fußgänger auszusteifen. Bei der Kollision eines Unterschenkels eines Fußgängers mit der Stoßfängerverkleidung bewirkt der untere Querträger, dass der Fußgänger im Bereich seiner Unterschenkel mit einer entsprechenden Kraft beschleunigt und somit definiert auf die Fronthaube des Personenkraftwagens bewegt wird.

Des Weiteren ist aus der EP 2692589 A1 eine Stoßfängeranordnung mit den technischen Merkmalen des Oberbegriffs des Anspruchs 1 bekannt, bei der ein Hauptquerträger gegenüber einem Hilfsquerträger in Fahrtrichtung verlagerbar und in dieser ausgefahrenen Position arretierbar ist.

Ferner ist aus der DE 10345749 A1 eine Vorrichtung zum Absorbieren von Aufprallenergie bekannt, die im Bereich eines Radkastens eines Kraftfahrzeugs montierbar ist. Mittels eines Kraftspeicherelementes ist es möglich, einen plastisch verformbaren Deformationskörper in eine vorgelagerte Deformationsstellung zu bringen und in dieser Stellung zu blockieren, um im Kollisionsfall die Energieabsorption durch ein Fahrzeugrad zu erhöhen und ein Eindringen des Fahrzeugrads in die Karosserie zu verhindern.

Aufgabe der Erfindung ist, die bekannten Stoßfängeranordnungen weiterzuentwickeln.

Diese Aufgabe wird durch eine Stoßfängeranordnung mit den Merkmalen des Anspruchs 1 erfüllt. Anspruch 7 betrifft einen Personenkraftwagen mit einer erfindungsgemäßen Stoßfängeranordnung.

Kerngedanke der Erfindung nach Anspruch 1 ist, im unteren Lastpfad jeweils im Anbindungsbereich der unteren Längsträger mit dem unteren Querträger wenigstens ein Federelement vorzusehen. Die erfindungsgemäß vorgesehenen Federelemente haben die Wirkung, dass im Fall einer Kollision des Personenkraftwagens mit einem Fußgänger der Fußgänger bestmöglich in Richtung der Frontklappe des Personenkraftwagens abgewiesen wird. Im Kollisionsfall erfährt der Oberkörper des Fußgängers eine Verlagerung in Richtung der Frontklappe. Dieser Schrägstellung des Oberkörpers folgen die Beine und insbesondere die Unterschenkel des Fußgängers nicht in gleichem Maß. Durch die Federelemente wird erfindungsgemäß ein "Rebound" erzeugt, eine "Rückfederung", durch den die Unterschenkel des Fußgängers in Fahrtrichtung des Personenkraftwagens eine Kraftbeaufschlagung erfahren und somit entsprechend der Schrägstellung des Oberkörpers die Unterschenkel "nachgezogen" werden.

Bei den Anbindungsbereichen der unteren Längsträger mit dem unteren Querträger handelt es sich um die vorderen Endabschnitte der unteren Längsträger oder um an den vorderen Endabschnitten der unteren Längsträger vorgesehene Deformationselemente, so genannte "Defoboxen". Aus Gründen der sprachlichen Vereinfachung ist grundsätzlich immer dann, wenn in Zusammenhang mit der vorliegenden Patentanmeldung der Begriff "unterer Längsträger" gebraucht wird, gleichermaßen die Alternative eines am vorderen Endabschnitt des unteren Längsträgers angeordneten Deformationselements mit umfasst. Derartige Deformationselemente dienen dem Energieabbau, indem sie sich im Kollisionsfall plastisch verformen, bevor eine plastische Verformung des Längsträgers eintritt.

Die Anordnung der Federelemente im Inneren der unteren Längsträger zeichnet sich durch einen besonders geringen Platzbedarf aus. Wie bereits obenstehend erläutert, ist hierzu gleichwirkend die Anordnung der Federelemente im Inneren von Deformationselementen ("Defoboxen"), die jeweils an den vorderseitigen Endabschnitten der unteren Längsträger angeordnet sind.

Erfindungsgemäß ermöglichen die Federelemente im Kollisionsfall eine Verlagerung des unteren Querträgers entgegen der Fahrtrichtung. Die Federelemente sind kompressibel ausgeführt, so dass im Kollisionsfall beim Zusammendrücken der Federelemente ein zusätzlicher Deformationsweg zur Verfügung steht. Dies gilt gleichermaßen bei Federelementen mit und ohne Vorspannung, wobei bei vorgespannten Federelementen der zur Verfügung stehende Deformationsweg gegebenenfalls etwas reduziert ist. Durch das Zusammendrücken des Federelements nimmt dieses zusätzliche Federenergie auf.

Gemäß einer Weiterbildung der Erfindung ist zur Begrenzung des Deformationsweges, also der Wegstrecke, die der untere Querträger entgegen der Fahrtrichtung eintaucht, am unteren Längsträger ein Anschlag vorgesehen. Sobald der Anschlag erreicht ist, gibt das zusammengedrückte Federelement die aufgenommene Energie wieder ab, wodurch der untere Querträger in Fahrtrichtung nach vorne beschleunigt wird und somit ein möglichst guter "Rebound" auf den Unterschenkel des Fußgängers ausgeübt wird.

Bevorzugt sind zwei Federelemente vorgesehen, die rechts und links, jeweils im Anbindungsbereich der unteren Längsträger zum unteren Querträger, angeordnet sind, so dass im Kollisionsfall mit nur zwei Federelementen eine federelastische Abstützung des gesamten unteren Querträgers gegenüber den unteren Längsträgern und damit gegenüber der Tragstruktur des Personenkraftwagens erreicht wird. Je nachdem, ob die Kollision des Personenkraftwagens mit dem Fußgänger im Mittenbereich oder im Bereich eines seitlichen Endabschnitts des unteren Querträgers stattfindet, können hierbei beide Federelemente den Querträger abstützen bzw. die Abstützung findet nur durch eines der beiden Federelemente statt.

In vorteilhafter Ausgestaltung der Erfindung weist die Einrichtung zur Aufhebung der direkten Anbindung wenigstens ein Bauteil auf, das eine Sollbruchstelle hat, so dass im Kollisionsfall bei Überschreitung eines vorgegebenen Kraftniveaus das Bauteil versagt und die direkte Anbindung zwischen unterem Längsträger und unterem Querträger selbsttätig aufgehoben wird. Diese Ausführung zeichnet sich durch eine sehr hohe Funktionssicherheit aus und niedrige Kosten aus. Eine zusätzliche Energiequelle zur Betätigung des Bauteils ist nicht erforderlich. Das Versagen des Bauteils mit der Sollbruchstelle ist auf die Kollision mit einem Fußgänger ausgelegt bzw. auf das Kraftniveau, das bei genormten Tests, beispielsweise mit einem so genannten FLEX-PLI Beinimpaktor ("Flexible Pedestrian Legform Impactor"), erreicht wird. Hingegen soll das Bauteil mit der Sollbruchstelle nicht bei Parkremplern und dergleichen versagen.

Selbstverständlich ist es möglich, anstelle eines Bauteils mit einer Sollbruchstelle beispielsweise ein pyrotechnisch wirkendes Element oder ein elektrisch ansteuerbares Element zur Aufhebung der Anbindung vorzusehen, zum Beispiel einen elektromagnetisch bewegbaren Sperrbolzen.

Beispielsweise ist die Einrichtung zur Aufhebung der direkten Anbindung des unteren Querträgers an den unteren Längsträger als Scherbolzen ausgebildet, der den unteren Längsträger (oder das Deformationselement) mit dem unteren Querträger verbindet, so lange, bis im Kollisionsfall die Anbindung durch den wegbrechenden Scherbolzen aufgehoben wird und sich der untere Querträger am Federelement abstützen kann.

Die Federelemente können im Normalbetrieb des Personenkraftwagens (das heißt ohne Krafteinwirkung durch eine Kollision) entspannt sein oder unter Vorspannung stehen. Im Fall vorgespannter Federelemente steht im Kollisionsfall zusätzlich die in den Federelementen gespeicherte Energie zur Verfügung, um die oben beschriebene vorteilhafte Wirkung hinsichtlich der Verlagerung eines Fußgängers zu verstärken.

Die Federelemente können aus Kunststoff oder aus Metall oder aus einer Kombination der beiden Materialien bestehen. In vorteilhafter Ausgestaltung der Erfindung sind die Federelemente als Schraubenfedern ausgebildet, somit kostengünstig, funktionssicher und platzsparend.

Anspruch 7 betrifft einen Personenkraftwagen mit einer erfindungsgemäßen Stoßfängeranordnung.

Alle in Zusammenhang mit der vorliegenden Patentanmeldung verwendeten Lageangaben (zum Beispiel vorne, hinten) beziehen sich auf die Fahrtrichtung des Personenkraftwagens bei Vorwärtsfahrt.

Mögliche Ausführungsbeispiele der Erfindung sind in der Zeichnung dargestellt und werden nachfolgend näher erläutert. Es zeigt:
- Fig. 1: eine schematische Darstellung einer Stoßfängeranordnung im Längsschnitt, nach dem Stand der Technik,
- Fig. 2: eine der Fig. 1 entsprechende schematische Darstellung der Erfindung,
- Fig. 3: eine schematische Darstellung der Erfindung in der Draufsicht und
- Fig. 4: eine schematische Schnittdarstellung der Erfindung.

In der Zeichnung ist die Fahrtrichtung mit FR bezeichnet und ein Koordinatensystem mit den Raumrichtungen X (Fahrzeuglängsrichtung), Y (Fahrzeugquerrichtung) und Z (Fahrzeughochachse) eingezeichnet. Die X-Richtung verläuft parallel zur Fahrtrichtung FR.

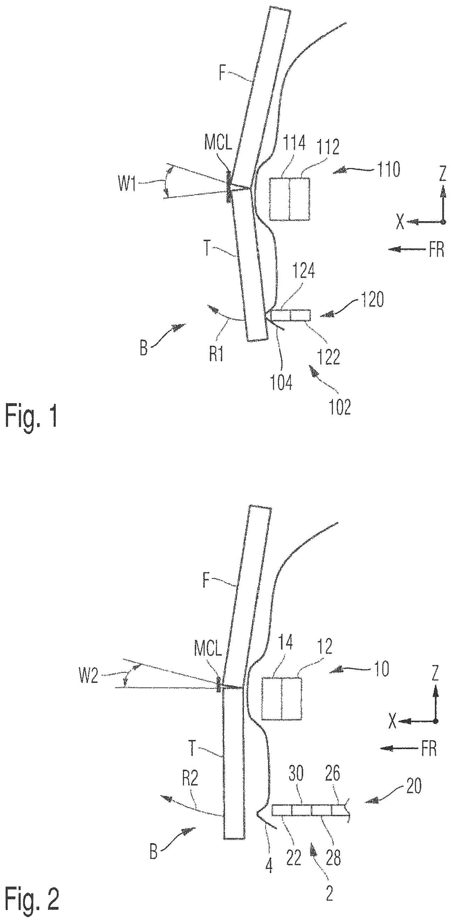

Fig. 1 zeigt den Frontbereich eines Personenkraftwagens mit einer Stoßfängeranordnung 102 nach dem Stand der Technik. Die bekannte Stoßfängeranordnung 102 weist einen oberen und einen unteren Lastpfad 110 bzw. 120 auf, mit einem oberen und einem unteren Querträger 112 bzw. 122. Die Stoßfängeranordnung 102 ist von einer Frontverkleidung 104 abgedeckt. An der Vorderseite des oberen Querträgers 112 ist eine Auflage 114 aus einem Energie abbauenden Absorberschaum vorgesehen. Auch der untere Querträger 122 weist vorderseitig eine Energie absorbierende Auflage oder Einlage 124 auf. Hierbei kann es sich beispielsweise um ein Schaummaterial oder um eine Auflage mit einer plastisch verformbaren Rippenstruktur handeln.

In Fig. 1 ist die Nachbildung einer Kollisionssituation des Personenkraftwagens mit einem Fußgänger dargestellt, unter Verwendung eines Beinimpaktors B, beispielsweise eines so genannten FLEX-PLI Beinimpaktors ("Flexible Pedestrian Legform Impactor"). Der Beinimpaktor B symbolisiert einen Fußgänger mit Blickrichtung quer zur Fahrtrichtung FR. Am Beinimpaktor B ist ein Innenband MCL dargestellt sowie ein Öffnungswinkel W1 zwischen Unterschenkel T und Oberschenkel F. Der Pfeil R1 beschreibt das Ausmaß der Verlagerung des Unterschenkels T nach dem Auftreffen auf die Frontverkleidung 102 im Bereich des unteren Querträgers 112. Wegen der plastischen Verformung der energieabsorbierenden Auflage 124 wird der Unterschenkel T nicht nennenswert im gleichen Drehsinn wie der Oberschenkel F verlagert. Hierdurch entsteht ein vergleichsweise großer Öffnungswinkel W1 am Knie und damit eine vergleichsweise große Dehnung des Innenbands MCL.

Fig. 2 zeigt einen erfindungsgemäßen Frontbereich eines Personenkraftwagens mit einer Stoßfängeranordnung 2, mit einem oberen und einem unteren Lastpfad 10 bzw. 20. Der obere Lastpfad 10 wird von nicht dargestellten oberen Längsträgern und einem oberen Querträger 12 gebildet. Der untere Lastpfad 20 wird von unteren Längsträgern 26 und einem unteren Querträger 22 gebildet. Die Stoßfängeranordnung 2 ist von einer Frontverkleidung 4 abgedeckt. An der Vorderseite des oberen Querträgers 12 ist eine Auflage 14 aus einem energieabbauenden Absorberschaum vorgesehen. Erfindungsgemäß ist zwischen dem unteren Querträger 22 und einem Deformationselement 28 ein Federelement 30 angeordnet. Die Deformationselemente 28 sind den unteren Längsträgern 26 vorgeschaltet oder in die vorderen Endabschnitte der unteren Längsträger 26 integriert. Sie bauen im Kollisionsfall durch plastische Verformung kinetische Energie ab.

Auch in Fig. 2 ist eine simulierte Kollisionssituation des Personenkraftwagens mit einem Fußgänger dargestellt, unter Einsatz eines Beinimpaktors B. Im Unterschied zur Kollisionssituation gemäß Fig. 1 erzeugt der untere Querträger 22 mit dem erfindungsgemäßen Federelement 30 jedoch eine Kraft in Fahrtrichtung FR, die eine Verlagerung des Unterschenkels T nach vorne (in Fahrtrichtung FR) bewirkt. Diese Verlagerung ist durch einen Pfeil R2 symbolisiert. Mit dem verstärkten "Rebound" der erfindungsgemäßen Stoßfängeranordnung 2 folgt der Unterschenkel T der Verlagerung des am Beinimpaktor B nicht nachgebildeten Oberkörpers eines Fußgängers in Richtung der Frontklappe des Personenkraftwagens im realen Kollisionsfall. Damit ist der Öffnungswinkel W2 kleiner als bei gleichartigen Kollisionssituation bei einer Stoßfängeranordnung 102 nach dem Stand der Technik, mit einer geringeren Dehnung des Innenbands MCL.

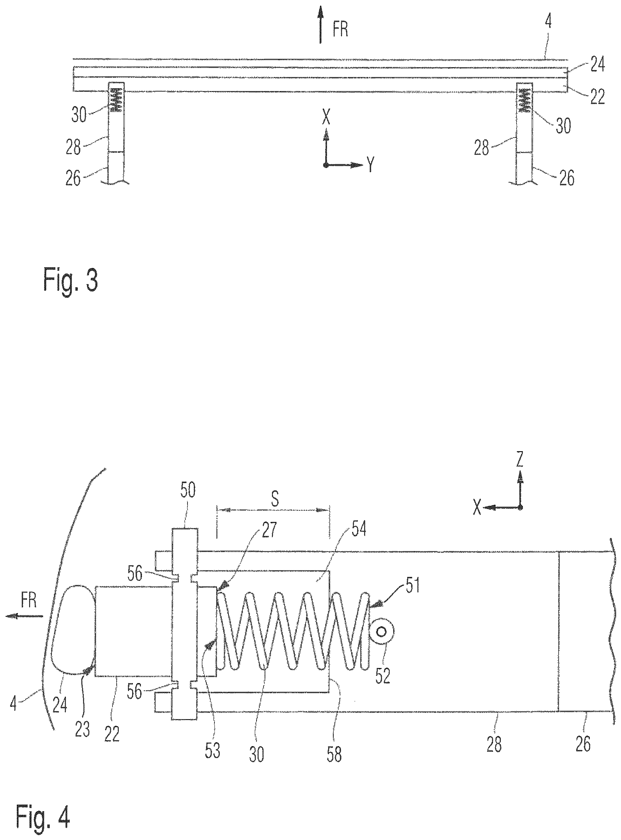

Fig. 3 zeigt den unteren Querträger 22 in schematisierter Darstellung in der Draufsicht. An der Vorderseite des unteren Querträgers 22 ist ein sich über die gesamte Breite des Querträgers 22 erstreckender Einleger 24 angeordnet, der den Zwischenraum zwischen der Innenseite der Frontverkleidung 4 und der Vorderseite des unteren Querträgers 22 nahezu vollständig ausfüllt. Der Einleger 24 dient dem Abbau von Kollisionsenergie durch elastische und/oder plastische Verformung. Der Einleger 24 ist beispielsweise aus einem Kunststoffmaterial gefertigt. Der Einleger 24 kann von einem schaumartigen Material gebildet sein. Zwischen der Rückseite des unteren Querträgers 22 und dem rechten sowie dem linken Deformationselement 28 sind die Federelemente 30 angeordnet. Hierbei ist es vorteilhaft, wie in Fig. 3 schematisch dargestellt, die Federelemente 30 in Platz sparender Weise im Inneren der Deformationselemente 28 anzuordnen.

Fig. 4 zeigt die erfindungsgemäße Stoßfängeranordnung im Bereich des unteren Lastpfades 20 im Schnitt. Der untere Längsträger 26 mit seinem vorderseitigen Deformationselement 28 ist über einen Scherbolzen 50 mit dem unteren Querträger 22 fest verbunden. Der Scherbolzen 50 besteht beispielsweise aus einem Kunststoffmaterial. Das Federelement 30 ist als Schraubenfeder ausgebildet und an ersten (hinteren) Endabschnitt 51 mittels einer Abstützung 52 am Deformationselement 28 festgelegt. Der zweite (vordere) Endabschnitt 53 des Federelements 30 liegt unter Vorspannung an der Rückseite 27 des unteren Querträgers 22 an. Diese Vorspannung wirkt sich jedoch angesichts der Anbindung des unteren Querträgers 22 an das Deformationselement 28 mittels des Scherbolzens 50 im Normalbetrieb des Personenkraftwagens nicht aus. Alternativ kann das Federelement 30 auch ohne oder ohne nennenswerte Vorspannung eingesetzt sein. An der Vorderseite 23 des unteren Querträgers 22 ist der Einleger 24 angeordnet, der den Zwischenraum zur Frontverkleidung 4 nahezu vollständig ausfüllt.

Im Deformationselement 28 ist ein gabelartiger Freiraum 54 für eine Verlagerung des Querträgers 22 entgegen der Fahrtrichtung FR vorgesehen. Diese Verlagerung stellt sich erfindungsgemäß im Kollisionsfall dann ein, wenn ein vorgegebenes Kraftniveau überschritten wird und der Scherbolzen 50 unter der Wirkung der Kollisionskraft an seinen Sollbruchstellen 56 bricht. Die Sollbruchstellen 56 sind als Querschnittsreduzierungen im Schaft des Scherbolzens 50 ausgebildet. Das Kraftniveau, ab dem der Scherbolzen 50 versagt, ist auf die bei einer Kollision mit einem Fußgänger auftretenden Kräfte abgestimmt. Nach Überschreitung dieses Kraftniveaus bricht der Scherbolzen 50, so dass die auf die Unterschenkel T des Fußgängers wirkende Kraft begrenzt wird, indem nun ein zusätzlicher Deformationsweg S zur Verfügung steht, da sich nach dem Wegbrechen des Scherbolzens 50 der untere Querträger 22 unter der Last der Kollision entgegen der Fahrtrichtung FR nach hinten bewegen kann, bis das Federelement 30 "auf Block geht" und/oder der Boden 58 des Freiraums 54 einen Anschlag bildet.

Nach dem Erreichen dieser Maximalintrusion wird im weiteren Verlauf der Kollision die im Federelement 30 aufgrund der vorangegangenen kollisionsbedingten Kompression (und gegebenenfalls aufgrund der bereits in der Normallage des Federelements 30 gemäß Fig. 4 aufgebrachten Vorspannung) gespeicherte Energie freigesetzt. Hierdurch erfährt der untere Querträger 22 und damit die Frontverkleidung eine Rückfederung ("Rebound"), durch die die Unterschenkel T des Fußgängers in Fahrtrichtung FR des Personenkraftwagens eine Kraftbeaufschlagung erfahren. Die Federsteifigkeit des Federelements 30 und gegebenenfalls dessen Vorspannung sind hierbei auf einen optimalen "Rebound" abgestimmt.

### Bezugszeichenliste

- 2: Stoßfängeranordnung
- 4: Frontverkleidung
- 10: oberer Lastpfad
- 12: oberer Querträger
- 14: Auflage
- 16: oberer Längsträger
- 20: unterer Lastpfad
- 22: unterer Querträger
- 23: Vorderseite
- 24: Einleger
- 26: unterer Längsträger
- 27: Rückseite
- 28: Deformationselement
- 30: Federelement
- 50: Scherbolzen
- 51: erster Endabschnitt
- 52: Abstützung
- 53: zweiter Endabschnitt
- 54: Freiraum
- 56: Sollbruchstelle
- 58: Boden
- 102: Stoßfängeranordnung
- 104: Frontverkleidung
- 110: oberer Lastpfad
- 112: oberer Querträger
- 114: Auflage
- 120: unterer Lastpfad
- 122: unterer Querträger
- 124: Auflage
- B: Beinimpaktor
- F: Oberschenkel
- FR: Fahrtrichtung
- K2: Pfeil
- K3: Pfeil
- MCL: Innenband
- R1: Pfeil
- R2: Pfeil
- S: Deformationsweg
- T: Unterschenkel
- W1: Öffnungswinkel
- W2: Öffnungswinkel
- X, Y, Z: Raumrichtung

## Patentansprüche

1. Stoßfängeranordnung für den Frontbereich eines Personenkraftwagens, mit einem oberen Lastpfad, der obere Längsträger und einen oberen Querträger aufweist, sowie mit einem unteren Lastpfad, der untere Längsträger und einen unteren Querträger aufweist, wobei
- im Anbindungsbereich des unteren Längsträgers (26) mit dem unteren Querträger (22) wenigstens ein Federelement (30) vorgesehen ist, das sich mit einem ersten Endabschnitt (51) am unteren Längsträger (26) abstützt,
- eine Einrichtung (50) vorgesehen ist, durch die im Kollisionsfall des Personenkraftwagens die direkte Anbindung zwischen dem unteren Längsträger (26) und dem unteren Querträger (22) aufhebbar ist und
- nach der Aufhebung der direkten Anbindung zwischen dem unteren Längsträger (26) und dem unteren Querträger (22) das Federelement (30) mit einem zweiten Endabschnitt (53) die Abstützung für den Querträger (22) bildet,
- wobei das Federelement (30) im Inneren des unteren Längsträgers (26) oder im Inneren eines am unteren Längsträger (26) vorgesehenen Deformationselements (28) angeordnet ist,
**dadurch gekennzeichnet, dass** das Federelement (30) im Kollisionsfall eine Verlagerung des unteren Querträgers (22) entgegen der Fahrtrichtung (FR) ermöglicht.

2. Stoßfängeranordnung nach Anspruch 1,
**dadurch gekennzeichnet, dass** das Federelement (30) und/oder der untere Längsträger (26) einen Anschlag für die Verlagerung des unteren Querträgers (22) entgegen der Fahrtrichtung (FR) bildet bzw. bilden.

3. Stoßfängeranordnung nach Anspruch 1 oder 2,
**dadurch gekennzeichnet, dass** die Einrichtung (50) zur Aufhebung der direkten Anbindung zwischen unterem Längsträger (26) und unterem Querträger (22) wenigstens ein Bauteil mit einer Sollbruchstelle (56) aufweist.

4. Stoßfängeranordnung nach Anspruch 3,
**dadurch gekennzeichnet, dass** die Einrichtung ein Scherbolzen (50) ist.

5. Stoßfängeranordnung nach einem der vorangegangenem Ansprüche,
**dadurch gekennzeichnet, dass** das Federelement (30) im Normalbetrieb des Personenkraftwagens unter Vorspannung steht.

6. Stoßfängeranordnung nach einem der vorangegangenem Ansprüche,
**dadurch gekennzeichnet, dass** das Federelement (30) eine Schraubenfeder ist.

7. Personenkraftwagen mit einer Stoßfängeranordnung nach einem der Ansprüche 1 bis 6.

## Claims

1. Bumper arrangement for the front region of a passenger car, having an upper load path, which has upper longitudinal members and an upper crossmember, and having a lower load path, which has lower longitudinal members and a lower crossmember, wherein
- at least one spring element (30) that is supported on the lower longitudinal member (26) with a first end portion (51) is provided in the connection region of the lower longitudinal member (26) to the lower crossmember (22);
- a device (50) is provided, with which, in the event of a collision of the passenger car, the direct connection between the lower longitudinal member (26) and the lower crossmember (22) is undoable; and
- after the direct connection between the lower longitudinal member (26) and the lower cross member (22) has been undone, the spring element (30) forms the support for the crossmember (22) with a second end portion (53);
- wherein the spring element (30) is arranged in the interior of the lower longitudinal member (26) or in the interior of a deformation element (28) provided on the lower longitudinal member (26),
**characterized in that,** in the event of a collision, the spring element (30) allows the lower crossmember (22) to move counter to the direction of travel (FR) .

2. Bumper arrangement according to Claim 1, **characterized in that** the spring element (30) and/or the lower longitudinal member (26) form(s) a stop for the movement of the lower crossmember (22) counter to the direction of travel (FR).

3. Bumper arrangement according to Claim 1 or 2, **characterized in that** the device (50) for undoing the direct connection between the lower longitudinal member (26) and the lower crossmember (22) has at least one component with a predetermined breaking point (56).

4. Bumper arrangement according to Claim 3, **characterized in that** the device is a shear bolt (50) .

5. Bumper arrangement according to one of the preceding claims,
**characterized in that** the spring element (30) is pretensioned during normal operation of the passenger car.

6. Bumper arrangement according to one of the preceding claims,
**characterized in that** the spring element (30) is a coil spring.

7. Passenger car having a bumper arrangement according to one of Claims 1 to 6.

## Revendications

1. Ensemble pare-chocs pour la zone frontale d'une voiture particulière, comprenant un chemin des efforts supérieur qui présente des longerons supérieurs et une traverse supérieure, ainsi que comprenant un chemin des efforts inférieur qui présente des longerons inférieurs et une traverse inférieure, dans lequel
- dans la zone de connexion du longeron inférieur (26) avec la traverse inférieure (22) est prévu au moins un élément faisant ressort (30) qui prend appui sur le longeron inférieur (26) par une première partie d'extrémité (51),
- un dispositif (50) est prévu qui permet en cas de collision de la voiture particulière d'éliminer la connexion directe entre le longeron inférieur (26) et la traverse inférieure (22), et
- après annulation de la connexion directe entre le longeron inférieur (26) et la traverse inférieure (22), l'élément faisant ressort (30) forme avec une deuxième partie d'extrémité (53) le support destiné à la traverse (22),
- l'élément faisant ressort (30) étant disposé à l'intérieur du longeron inférieur (26) ou à l'intérieur d'un élément de déformation (28) prévu sur le longeron inférieur (26),
**caractérisé en ce que** l'élément faisant ressort (30) permet en cas de collision un décalage de la traverse inférieure (22) à l'opposé du sens de la marche (FR).

2. Ensemble pare-chocs selon la revendication 1, **caractérisé en ce que** l'élément faisant ressort (30) et/ou le longeron inférieur (26) forme(nt) une butée pour le décalage de la traverse inférieure (22) à l'opposé du sens de la marche (FR).

3. Ensemble pare-chocs selon la revendication 1 ou 2, **caractérisé en ce que** le dispositif (50) permettant d'éliminer la connexion directe entre le longeron inférieur (26) et la traverse inférieure (22) présente au moins un composant doté d'un point destiné à la rupture (56).

4. Ensemble pare-chocs selon la revendication 3, **caractérisé en ce que** le dispositif est une goupille de cisaillement (50).

5. Ensemble pare-chocs selon l'une quelconque des revendications précédentes, **caractérisé en ce que** l'élément faisant ressort (30) est sous précontrainte en fonctionnement normal de la voiture particulière.

6. Ensemble pare-chocs selon l'une quelconque des revendications précédentes, **caractérisé en ce que** l'élément faisant ressort (30) est un ressort hélicoïdal.

7. Voiture particulière comprenant un ensemble pare-chocs selon l'une quelconque des revendications 1 à 6.
